# EUROPEAN PATENT SPECIFICATION

(11) **EP 0 694 251 B1**
(45) Date of publication and mention of the grant of the patent: **09.09.1998**
(21) Application number: 95610043.2
(22) Date of filing: 13.07.1995
(51) Int. Cl.: A01F 29/00

(54) **A method for breaking up a bale of straw and a straw firing plant for carrying out said method**
Verfahren um Strohballen zu Zerlegen und Strohofen der dieses Verfahren benutzt
Méthode de déchiquetage de balles de paille et brûleur de paille employant la méthode

(30) Priority: 22.07.1994 DK 87294
(43) Date of publication of application: 31.01.1996
(73) Proprietor: BURMEISTER & WAIN ENERGI A/S, DK-2830 VIRUM (DK)
(72) Inventor: Andersen, Ole-Jorn, DK-2900 Hellerup (DK)
(74) Representative: Raffnsöe, Knud Rosenstand

(56) References cited:
- DE-A- 3 141 603
- FR-A- 2 509 570
- GB-A- 1 465 020
- US-A- 3 915 392

## Description

The present invention relates to a method for breaking up a bale of straw, the bale of straw being conveyed towards a breaking-up device comprising at least two parallel, rotatable breaking-up means, each comprising an elongate body shaped like a solid of revolution and carrying a helicoid.

A method of this kind is disclosed in DK Patent Application No. 0137/93. According to this prior method straw is loosened from or raked out from a bale of straw by raking projections being passed along the area of the bale of straw facing the breaking-up device, said raking projections being moved away from a line by and large through the centre of said area and towards both sides, and where bigger lumps of straw are retained by a stationary stop at each side of the path of conveyance of the bale, whereas finely divided straw is allowed to pass. It is stated that this method entails an even raking of the bales, because the straw alone is pressed symmetrically out towards the stationary stop. It is in particular emphasized that the lateral forces acting on the compacted material in directions along the transverse surface become by and large of the same size towards the two sides, whereby they in practice neutralize one another. At the same time it is said that the raking capacity is big, as two stops are used.

The object of the stops is to prevent the layer of straw from each compacting stroke in the common bales of "Heston" type from being torn out of the bale as a whole or in form of bigger, coherent lumps of compacted straw.

This prior method suffers from the drawback that the comminuting of the bigger lumps of straw takes place by the raking projections moving repeatedly through the lumps, while they are retained by the stationary stops which in practice are in form of combs. This additional working of the lumps of straw may impede the conveyance of already loosened straw which is brought past the stop and consequently subjected to an additional, superfluous comminution. There is further a risk that the lumps of compacted straw may hinder the movement of the raking projections with a resulting unintentional overloading of the breaking-up device. It is a further drawback that the raking projections, when it is a question of comminuting a bale of straw which has been compacted from unusually brittle straw, only break or tear the straw without conveying it away.

It is the object of the invention to provide a method of the above type which does not suffer from the described drawbacks. This is attained according to the invention in that the straw in the area of the bale facing the breaking-up means is loosened and conveyed away, substantially in the transport direction of the helicoid during the passage of the helicoid through the area, and in that the breaking-up means are swung away from said area of the bale of straw to allow lumps, if any, of compacted straw to be transported away.

Hereby is attained that the straw is both loosened and carried away in the transport direction of the helicoid or in other words in a direction parallel with the elongate bodies of the breaking-up means, which gives the smallest possible resistance to breaking up of the bale and conveyance of the loosened straw. If lumps of compacted straw should be present, the breaking-up means are swung away from the area which is being worked to allow these lumps to be carried away without first attempting to break them up.

Tests have shown that such portions of compacted straw only insignificantly influence the combustion in the straw furnace, and by not breaking up these portions after they have come off the bale of straw, the above described drawbacks are eliminated simultaneously with opening the possibility of a considerable simplification of an apparatus for carrying out the method.

The invention also relates to a straw firing plant for carrying out the above method, comprising a supply duct for bales of straw and a breaking-up device located at the discharge end of the supply duct and comprising at least two adjacent breaking-up means which each comprises a body shaped like a solid of revolution and carrying a helicoid, and which at one end is rotatably journalled in bearings arranged outside the supply duct, each breaking-up means being adapted to rotate in such a direction that the transport direction of the helicoid points away from the end of the bearing.

From the above-mentioned DK Patent Application No. 0137/93 is also known an apparatus which may be used in a straw firing plant of said type. In this prior apparatus the breaking-up means take the form of raking rollers which along their surfaces are provided with projections adapted to break loose straw from the face of the bale which is pressed up against the rollers and to pull the straw around and out towards the sides. It is stated that the raking rollers may comprise a cylindrical body with one or more circumferential, helical, flat lamellas, on which projections, in form of exchangeable teeth, are provided along the radial outer edges of the lamellas. These raking rollers are designed with a view to taking the straw to comblike stops at both sides of the bale of straw.

The straw firing plant according to the invention differs from the known apparatus in that each breaking-up device is a screw conveyor with a slim, conical body, the biggest diameter of which is positioned at the end with the bearings, and where the pitch of the helicoid increases towards the other end, that the helicoids of the screw conveyors overlap without touching, that the screw conveyors at their ends, which are pointing away from the bearings, extend beyond one side of the supply duct, and that the screw conveyors are pivotable away from the discharge end of the supply duct.

By the straw firing plant according to the invention is attained that the helicoid is pressed through or scraping over the surface of the bale of straw from one edge to the opposite edge in the transport direction of the helicoid. This gives a shorter and more direct transport path for loosened straw than in the known apparatus. By giving the body of the breaking-up means a conical shape more room will be available for the loosened straw towards the free end of the body, where the biggest amount of loosened straw pass. The transport capacity of the screw also increases towards the free end of the breaking-up means on account of the increasing pitch of the helicoid. The combined effect of the conical body and the increasing pitch of the helicoid is that the breaking-up means works as a most effective screw conveyor, which quickly and effectively removes loosened straw in the longitudinal direction of the body, contrary to the raking rollers in the known apparatus, which are adapted firstly to remove the straw in a direction perpendicular to the longitudinal axes of the raking rollers and secondly to transport the straw away parallel with the longitudinal axes of the raking rollers.

An effective loosing of the straw and transport thereof results from the overlapping of the helicoids of the screw conveyors, also in the area opposite the centre line of the longitudinal axes of the screw conveyors.

As the free ends of the screw conveyors extend beyond one side of the supply duct, the loosened straw is guided by the helicoid during the entire transport away from the discharge end of the supply duct, and the risk that straw may get stuck between said side of the discharge end of the supply duct and the axial end face of the screw conveyor is eliminated. Said side of the supply duct acts as a stop preventing that all the straw from a compacting stroke or big pieces thereof get stuck between the end of the discharge end of the supply duct and the screw conveyors. Such loosened straw from a compacting stroke will be retained and worked in the usual way by the helicoid of the conveyor screw. The stop cannot, however, prevent some smaller lumps of compacted straw from a compacting stroke from getting stuck between the screw conveyor and the discharge end of the supply duct, but these lumps are released by the swinging of the screw conveyors away from the discharge end of the supply duct, whereby the lumps can be transported away without any hindrance and without the risk of overloading the bearings or the drive of the screw conveyors.

The design of the screw conveyors with a slim, conical body also has another important effect, as it has turned out that this feature prevents the strings, which are normally tied around the bales of straw and which during the breaking up of the bales are chafed or torn apart, from being wound around the body of the screw conveyor; the strings are just taken away together with the loosened straw. The explanation of this phenomenon is presumably that the cross-section of the body of the screw conveyor, around which the string may wind, gets smaller and smaller as the string is transported towards the end of the screw conveyor, and that the string consequently cannot be pulled tighter and tighter around the body for each turn of the screw.

In a preferred embodiment of the straw firing plant according to the invention, the diameter of the helicoid decreases towards the end of the body pointing away from the bearings. This feature contributes to preventing the strings from being wound around the screw conveyor, the strings being simply discharged together with the loosened straw. It is presumed that the slim, conical body and the decreasing diameter of the threads also have the effect that long, possibly tangled straw does not tend to wind around the screw conveyors.

In other embodiments the helicoid may be provided with notches along the periphery for cutting or tearing strings surrounding the bales of straw. Such notches or teeth will facilitate the cutting of strings or perhaps netting wrapped around the bales of straw.

Known straw firing plants are usually constructed in such a way that the loosened straw from the breaking-up device falls into a silo. From here the straw is introduced into the furnace chamber through a supply duct by means of a reciprocating piston or a stoker. According to an embodiment of the invention, the breaking-up means may be positioned in the feed duct. This is achieved by the breaking-up device simultaneously acting as a mechanical stoker.

The invention will be explained in detail in the following by means of some embodiments and with reference to the drawing, in which
Fig. 1 schematically shows a longitudinal view of a straw firing plant according to the invention,
Fig. 2 a view along the line II-II in Fig. 1,
Fig. 3 a longitudinal view in a straw firing plant according to another embodiment,
Fig. 4 a view along the line IV-IV in Fig. 3,
Fig. 5 a lateral view at a larger scale of a screw conveyor,
Fig. 6 a detailed view of a notch in a helicoid, and
Fig. 7 a detailed view of a tooth on one helicoid.

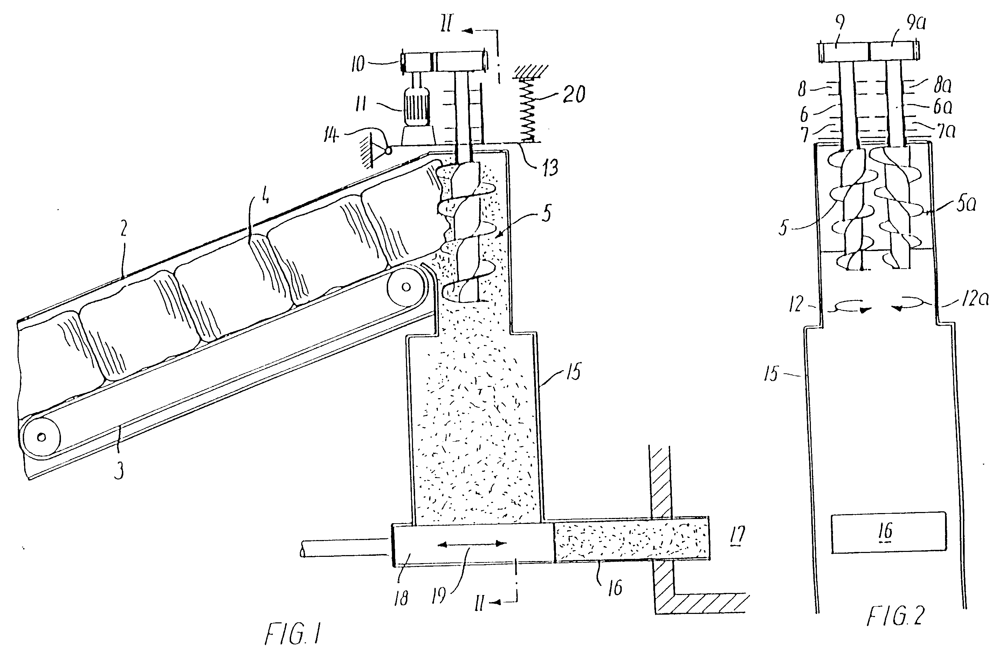

In Fig. 1 of the drawing a supply duct 2 is shown with a conveyor belt 3 conveying bales of straw 4 to a pair of screw conveyors 5 and 5a, which are best seen in Fig. 2. The screw conveyors are carried on shafts 6 and 6a resting in bearings 7,8 and 7a,8a positioned outside the supply duct 2. At the shaft end gear wheels 9 and 9a engage each other. By means of an electric motor 11 with a gear wheel 10 engaging the gear wheel 9, the screw conveyors are brought to rotate in the directions indicated by the arrows 12 and 12a.

Screw conveyor 5 with shaft 6, bearings 7 and 8, toothed wheels 9 and 10, and electric motor 11 are mounted on a common base plate 13, which is pivotally journalled on a shaft 14. If straw is getting jammed between the end of the supply duct 2 and the screw conveyor 5, the screw conveyor swings away from the bale of straw 4 against the force from a compression spring 20.

Below screw conveyors 5 and 5a a silo 15 is provided for straw which has been loosend by means of the screw conveyors 5. At the bottom of the silo a feed duct 16 is provided, through which the loosened up straw is pressed into a furnace chamber by means of a piston 18 reciprocating as indicated by the arrow 19.

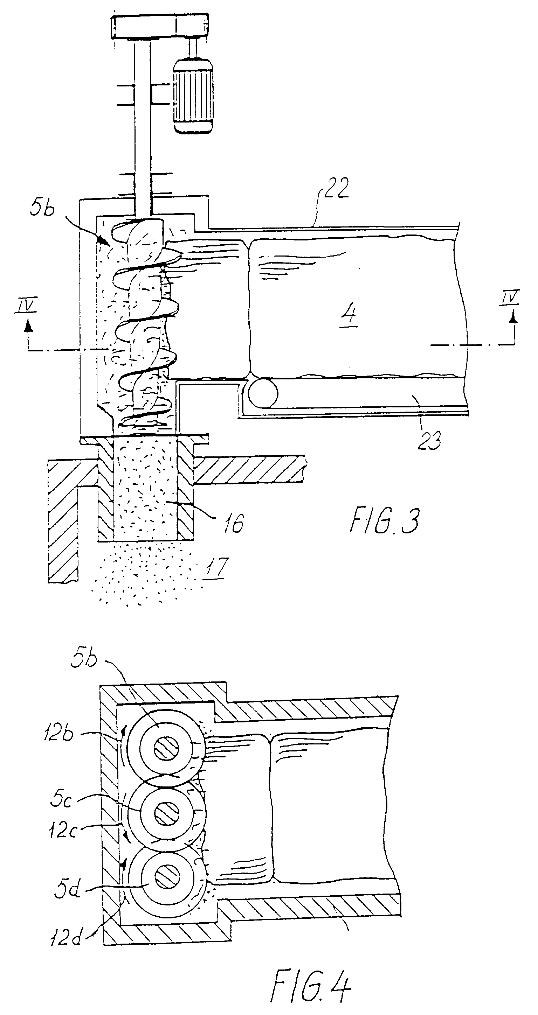

In the embodiment shown in Figs. 3 and 4 the plant is provided with a conveyor belt 23 supplying bales of straw 4 through a supply duct 22. At the end of the supply duct 22 three screw conveyors 5b, 5c, and 5d are provided which in a similar way as the one described in connection with Figs. 1 and 2 are carried by shafts resting in bearings outside the supply duct and driven by gears by an electric motor. As will be seen from Fig. 4, the screw conveyors overlap without touching and are driven in the directions indicated by the arrows 12b, 12c, and 12d. The loosened straw is taken directly into a vertical feed duct 16, from where it enters the furnace chamber 17.

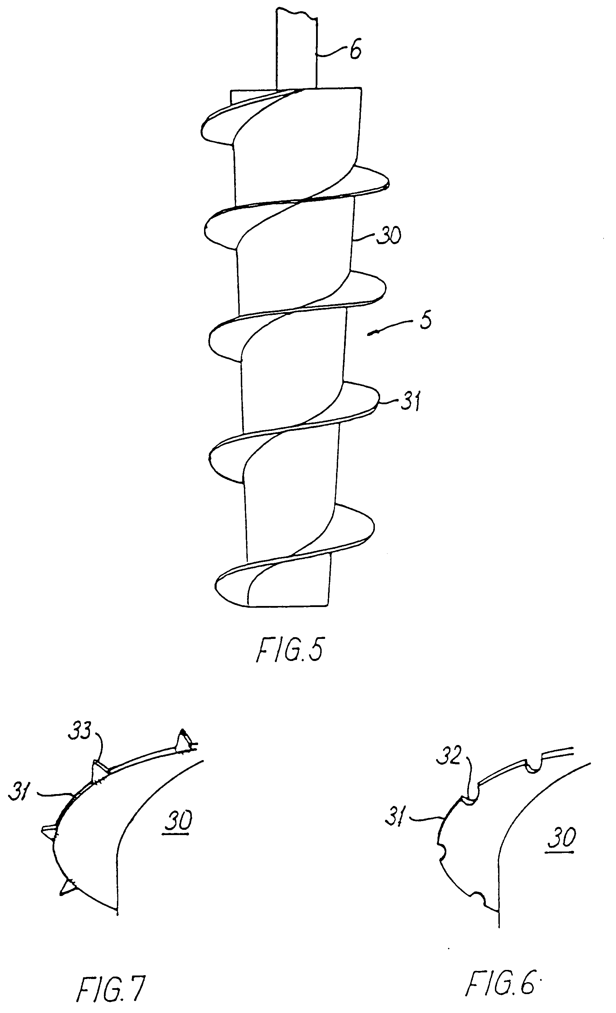

The screw conveyor 5 shown in Fig. 5 is constructed with a shaft 6 carrying a body 30 in form of a slim frustum of a cone and a plate 31 welded to the body, said plate forming a helicoid. The outer edge of the plate has as indicated in Figs. 6 and 7 notches 32 or welded-on teeth arranged with spaces in between them, said notches and teeth tearing and cutting the strings tied around the bales of straw.

## Claims

1. A method for breaking up a bale of straw (4), in which the bale of straw is conveyed towards a breaking-up device comprising at least two parallel, rotatable breaking-up means (5,5a), each comprising an elongate body (30) shaped like a solid of revolution and carrying a helicoid (31), **characterized** in that the straw of the area of the bale (4) facing the breaking-up means (5,5a) is loosened and conveyed away, substantially in the transport direction of the helicoid during the passage of the helicoid through the area, and in that the breaking-up means (5,5a) are swung away from said area of the bale of straw (4) to allow lumps, if any, of compacted straw to be transported away.

2. A straw firing plant for carrying out the method according to claim 1, comprising a supply duct (2) for bales of straw (4) and a breaking-up device located at the discharge end of the supply duct and comprising at least two adjacent breaking-up means (5,5a) which each comprises a body (30) shaped like a solid of revolution and carrying a helicoid (31), and which at one end is rotatably journalled in bearings (7,8;7a,8a) arranged outside the supply duct (2), each breaking-up means (5,5a) being adapted to rotate in such a direction that the transport direction of the helicoid points away from the end of the bearing, **characterized** in that each breaking-up device is a screw conveyor (5,5a) with a slim, conical body (30), the biggest diameter of which is positioned at the end with the bearings (7,8;7a,8a), and where the pitch of the helicoid (31) increases towards the other end, that the helicoids (31) of the screw conveyors (5,5a) overlap without touching, that the screw conveyors (5,5a) at their ends, which are pointing away from the bearings (7,8;7a,8a), extend beyond one side of the supply duct (2), and that the conveyor screws (5,5a) are pivotable away from the discharge end of the supply duct (2).

3. A straw firing plant according to claim 2, **characterized** in that the diameter of the helicoid (31) decreases towards the end of the body (30) pointing away from the bearings.

4. A straw firing plant according to claim 2 or 3, **characterized** in that the helicoid (31) is provided with notches (32) along the periphery for cutting or tearing strings surrounding the bales of straw (4).

5. A straw firing plant according to claims 2 - 4, **characterized** in that the helicoid (31) is provided with teeth (33) along the periphery for cutting or tearing strings surrounding the bales of straw (4).

6. A straw firing plant according to any of the preceding claims, with a feed duct (16) for supply of loosened straw to a furnace (17), **characterized** in that the breaking-up means (5b,5c,5d) are positioned in the feed duct (16).

## Patentansprüche

1. Ein Verfahren, um einen Strohballen (4) zu zerlegen, in welchem der Strohballen auf eine Auflöse-Vorrichtung zugefördert wird, welche zumindest zwei parallele, drehbare Auflöse-Mittel (5, 5 a) aufweist, jedes ein wie einen Drehkörper geformten und ein Helikoid (31) tragenden länglichen Rumpf (30) aufweisend,
**dadurch gekennzeichnet**,
daß das Stroh des den Auflöse-Mitteln (5, 5 a) gegenüberliegenden Bereichs des Ballens (4) aufgelockert und im wesentlichen in der Förderungsrichtung des Helikoids während des Durchlaufs des Helikoids durch den Bereich weggefördert wird und daß die Auflöse-Mittel (5, 5 a) von besagtem Bereich des Strohballens (4) weggeschwenkt werden, um eventuellen Klumpen von verdichtetem Stroh zu erlauben, wegbefördert zu werden.

2. Eine Strohfeuerungsanlage zum Ausführen des Verfahrens nach Anspruch 1, welche einen Versorgungskanal (2) für Strohballen (4) und eine sich an dem Ausstoßende des Versorgungskanals befindende Auflöse-Vorrichtung aufweist und die zumindest zwei benachbarte Auflöse-Mittel (5, 5 a) aufweist, welche jedes einen wie ein Drehkörper geformten und ein Helikoid (31) tragenden Rumpf (30) aufweist und an einem Ende in außerhalb des Versorgungskanals (2) angeordneten Lagern (7, 8; 7 a, 8 a) drehbar gelagert ist, wobei jedes Auflöse-Mittel (5, 5 a) geeignet ist, sich in einer solchen Richtung zu drehen, daß die Förderungsrichtung des Helikoids von dem Ende des Lagers wegzeigt,
**dadurch gekennzeichnet,**
daß jede Auflöse-Vorrichtung ein Schneckenförderer (5, 5 a) mit einem schlanken, konischen Rumpf (30) ist, dessen größter Durchmesser an dem Ende mit den Lagern (7, 8; 7 a, 8 a) plaziert ist und wo die Steigung des Helikoids (31) auf das andere Ende zu zunimmt, daß die Helikoiden (31) der Schneckenförderer (5, 5 a) überlappen ohne sich zu berühren, daß sich die Schneckenförderer (5, 5 a) an ihren Enden, welche von den Lagern (7, 8; 7 a, 8 a) wegzeigen, über eine Seite des Versorgungskanals (2) hinaus erstrecken und daß die Förderschnecken (5, 5 a) von dem Ausstoßende des Versorgungskanals (2) wegdrehbar sind.

3. Eine Strohfeuerungsanlage nach Anspruch 2,
**dadurch gekennzeichnet,**
daß der Durchmesser des Helikoids (31) auf das von den Lagern wegzeigende Ende des Rumpfes (30) zu abnimmt.

4. Eine Stohfeuerungsanlage nach Anspruch 2 oder 3,
**dadurch gekennzeichnet,**
daß das Helikoid (31) entlang der Peripherie mit Kerben (32) zum Schneiden oder Zerreißen von die Strohballen (4) umgebenden Schnüren versehen ist.

5. Eine Strohfeuerungsanlage nach Ansprüchen 2 bis 4,
**dadurch gekennzeichnet,**
daß das Helikoid (31) entlang der Peripherie mit Zähnen (33) zum Schneiden oder Zerreißen von die Strohballen (4) umgebenden Schnüren versehen ist.

6. Eine Strohfeuerungsanlage nach einem der vorhergehenden Ansprüche, mit einem Beschickungskanal (16) zur Lieferung von aufgelockertem Stroh an einen Feuerraum (17),
**dadurch gekennzeichnet,**
daß die Auflöse-Mittel (5 b, 5 c, 5 d) in dem Beschickungskanal (16) plaziert sind.

## Revendications

1. Procédé pour désagréger une balle de paille (4), selon lequel la balle de paille est convoyée en direction d'un dispositif de désagrégation comprenant au moins deux moyens rotatifs parallèles de désagrégation (5, 5a), comportant chacun un corps allongé (30) conformé à la manière d'un solide de révolution et portant un hélicoïde (31), caractérisé en ce que la paille de la zone de la balle (4), qui fait face aux moyens de désagrégation (5, 5a), est détachée et évacuée par convoyage, essentiellement dans la direction de transport de l'hélicoïde pendant le passage de ce dernier dans la zone, et en ce que les moyens de désagrégation (5,5a) sont écartés par pivotement à partir de ladite zone de la balle de paille (4) pour permettre d'évacuer d'éventuels grumeaux formés de paille compactée.

2. Installation de brûlage de paille pour la mise en oeuvre du procédé selon la revendication 1, comprenant un conduit d'alimentation (2) pour des balles de paille (4) et un dispositif de désagrégation situé au niveau de l'extrémité de décharge du conduit d'alimentation et comprenant au moins deux moyens adjacents de désagrégation (5,5a), qui comprennent chacun un corps (30) agencé en forme de solide de révolution et portant un hélicoïde (31), et qui est tourillonné, à une extrémité, de manière à pouvoir tourner dans les paliers (7,8; 7a,8a) disposés à l'extérieur du conduit d'alimentation, chacun des moyens de désagrégation étant adapté pour tourner dans une direction telle que la direction d'entraînement de l'hélicoïde est tournée à l'opposé de l'extrémité du palier, caractérisée en ce que chaque dispositif de désagrégation est un convoyeur à vis (5,5a) comportant un corps conique élancé (30), dont le diamètre maximum est situé à l'extrémité comportant les paliers (7,8;7a,8a), et dans lequel le pas de l'hélicoïde (31) augmente en direction de l'autre extrémité, que les hélicoïde (31) des convoyeurs à vis (5,5a) se chevauchent sans se toucher, que les convoyeurs à vis (5,5a) s'étendent, au niveau de leurs extrémités qui sont tournées à l'opposé des papiers (7,8;7a,8a), au-delà d'un côté du conduit d'alimentation (2) et que les vis convoyeuses (5,5a) peuvent être écartées par pivotement à partir de l'extrémité de décharge du conduit d'alimentation (2).

3. Installation de brûlage de paille selon la revendication 2, caractérisée en ce que le diamètre de l'hélicoïde (31) diminue en direction de l'extrémité du corps (30) tourné à l'opposé des paliers.

4. Installation de brûlage de paille selon la revendication 2 ou 3, caractérisée en ce que l'hélicoïde (31) comporte des encoches (32) le long de la périphérie pour le découpage ou l'arrachement de bandes entourant les balles de paille (4).

5. Installation de brûlage de paille selon les revendications 2-4, caractérisée en ce que l'hélicoïde (31) comporte des dents (33) disposées le long de la périphérie pour le découpage ou l'arrachement de bandes entourant les balles de paille (4).

6. Installation de brûlage de paille selon l'une quelconque des revendications précédentes, comportant un conduit d'alimentation (16) pour envoyer la paille détachée à un four (17), caractérisée en ce que les moyens de désagrégation (5b,5c,5d) sont disposés dans le conduit d'alimentation (16).
